(19) Europäisches Patentamt
European Patent Office
Office européen des brevets

(11) Veröffentlichungsnummer: **0 237 710**
**A2**

(12) # EUROPÄISCHE PATENTANMELDUNG

(21) Anmeldenummer: **87100434.7**

(22) Anmeldetag: **15.01.87**

(51) Int. Cl.4: **C08L 71/04**, C08L 77/00, C08L 57/00

(30) Priorität: **21.01.86 DE 3601581**
**07.06.86 DE 3619224**

(43) Veröffentlichungstag der Anmeldung:
**23.09.87 Patentblatt 87/39**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Taubitz, Christof, Dr.**
**In der Dreispitz 15**
**D-6706 Wachenheim(DE)**
Erfinder: **Seiler, Erhard, Dr.**
**Erpolzheimer Strasse 1**
**D-6700 Ludwigshafen(DE)**
Erfinder: **Hambrecht, Jürgen, Dr.**
**Am Klosterwald 31**
**D-4400 Münster-Hiltrup(DE)**
Erfinder: **Mitulla, Konrad, Dr.**
**Schwalbenweg 31**
**D-6700 Ludwigshafen(DE)**
Erfinder: **Boehlke, Klaus, Dr.**
**Gerhart-Hauptmann-Strasse 53**
**D-6717 Hessheim(DE)**

(54) **Thermoplastische Formmassen.**

(57) Thermoplastische Formmassen, enthaltend

A) mindestens 5 Gew.% eines Polyphenylenethers,

B) mindestens 5 Gew.% eines Polyamids,

mit einem Gehalt an

C) mindestens 0,1 Gew.% eines Copolymerisats aufgebaut aus

$C_1$) mindestens 30 Gew.% Styrol und/oder substituierten Styrolen der allgemeinen Formel I

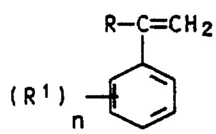

(I)

wobei R und $R^1$ einen Alkylrest mit 1 bis 8 C-Atomen, ein Wasserstoffatom und/oder ein Halogenatom darstellen und n 0, 1, 2 oder 3 ist,

$C_2$) mindestens 0,5 Gew.% eines Epoxidgruppen enthaltenden polymerisierbaren Monomeren und/oder

$C_3$) mindestens 0,05 Gew.% eines Halogenbenzylgruppen enthaltenden polymerisierbaren Monomeren mit der Struktureinheit (II)

EP 0 237 710 A2

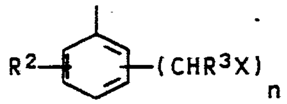

(II)

wobei X ein Halogenatom und $R^2$ und $R^3$ jeweils einen Alkylrest mit 1 bis 8 C-Atomen oder ein Wasserstoffatom darstellen und n 1, 2 oder 3 ist, und/oder

$C_4$) mindestens 0,05 Gew.% eines Oxazolin-Gruppen enthaltenden polymerisierbaren Monomeren und

$C_5$) 0 bis 20 Gew.% Acrylnitril, Methacrylnitril und/oder weiteren nicht-ionogenen Comonomeren und

D) 0 bis 35 Gew.% eines schlagzäh modifizierenden Kautschauks werden beschrieben, die sich durch eine besonders gute Schlagzähigkeit auszeichnen.

## Thermoplastische Formmassen

Die Erfindung betrifft thermoplastische Formmassen, enthaltend

A) mindestens 5 Gew.% eines Polyphenylenethers und

B) mindestens 5 Gew.% eines Polyamids.

Weiterhin betrifft die Erfindung Formkörper, die diese Formmassen als wesentliche Komponente enthalten.

Polyphenylenether haben hervorragende thermische, mechanische und dielektrische Eigenschaften, sind jedoch in reiner Form nur schwierig zu verarbeiten. Bekannt sind auch Gemische aus Polyphenylenethern und Styrolpolymerisaten; diese haben jedoch den Nachteil, daß ihre Lösungsmittelbeständigkeit sehr gering ist. Ihre Verwendungsbreite ist deshalb sehr begrenzt.

Aus der US-A 3 379 792 ist weiterhin bekannt, daß die Schmelzflußeigenschaften von Polyphenylenethern durch den Zusatz einer geringen Menge an Polyamid verbessert werden können. Ferner wird jedoch in dieser Druckschrift festgestellt, daß bei einem Polyamidzusatz von mehr als 20 Gew.% andere Eigenschaften des Polyphenylenethers in beträchtlichem Maße verschlechtert werden.

Aus der GB-A-2 054 623 sind auch Formmassen aus Polyphenylenethern und größeren Anteilen an Polyamiden bekannt. Zu deren Herstellung ist es jedoch erforderlich, einen längeren Mischvorgang bei Schmelztemperatur vorzunehmen. Beim Mischen bei Schmelztemperatur über längere Zeit treten jedoch leicht Abbauerscheinungen ein.

In der EP-A-24 120 werden Mischungen aus Polyphenylenethern und Polyamiden beschrieben, die ein flüssiges Dienpolymer und/oder eine Verbindung mit einer Kohlenstoff-Kohlenstoff-Doppelbindung und einem Carbonsäurerest und/oder einer Epoxiverbindung enthalten. Die genannten Epoxiverbindungen sind durch Kondensation von mehrwertigen Alkoholen oder Phenolen und Epichlorhydrin hergestellte Epoxiharze, Glycidylderivate von Aminoverbindungen oder epoxidierte Produkte eines höheren Olefins oder Cycloalkens. Die derart hergestellten Formmassen weisen zwar bessere mechanische Eigenschaften auf, doch sind schichtweise Spaltungen (Delaminierung) an den Formkörpern zu beobachten.

Aufgabe der vorliegenden Erfindung war es daher, thermoplastische Formmassen zur Verfügung zu stellen, die neben einer guten Verarbeitbarkeit gute thermische, mechanische und dielektrische Eigenschaften aufweisen und sich insbesondere durch eine hohe Schlagzähigkeit und gute Lösungsmittelbeständigkeit auszeichnen, ohne daß Delaminierungsvorgänge auftreten.

Erfindungsgemäß wird diese Aufgabe gelöst durch thermoplastische Formmassen enthaltend

A) mindestens 5 Gew.% eines Polyphenylenethers,

B) mindestens 5 Gew.% eines Polyamids,

gekennzeichnet durch einen Gehalt an

C) mindestens 0,1 Gew.% eines Copolymerisats aufgebaut aus

$C_1$) mindestens 30 Gew.% Styrol und/oder substituierten Styrolen der allgemeinen Formel I

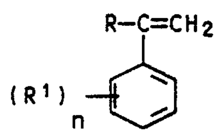

(I)

wobei R und $R^1$ einen Alkylrest mit 1 bis 8 C-Atomen, ein Wasserstoffatom und/oder ein Halogenatom darstellen und n 0, 1, 2 oder 3 ist,

$C_2$) mindestens 0,5 Gew.% eines Epoxidgruppen enthaltenden polymerisierbaren Monomeren

und/oder

$C_3$) mindestens 0,05 Gew.% eines Halogenbenzylgruppen enthaltenden polymerisierbaren Monomeren mit der Struktureinheit (II)

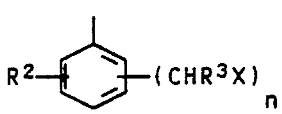

(II)

wobei X ein Halogenatom und $R^2$ und $R^3$ einen Alkylrest mit 1 bis 8 C-Atomen oder ein Wasserstoffatom darstellen und n 1, 2 oder 3 ist,

und/oder

$C_4$) mindestens 0,05 Gew.% eines Oxazolin-Gruppen enthaltenden polymerisierbaren Monomeren,

und

$C_5$) 0 bis 20 Gew.% Acrylnitril, Methacrylnitril und/oder weiteren nicht-ionogener Comonomeren

und

D) 0 bis 35 Gew.% eines schlagzäh modifizierenden Kautschuks.

Bevorzugte Massen dieser Art ergeben sich aus den Unteransprüchen.

Die erfindungsgemäßen thermoplastischen Formmassen haben den Vorteil, daß sie gut verarbeitbar sind, gute mechanische Eigenschaften und eine hohe Schlagzähigkeit und Lösungsmittelbeständigkeit aufweisen. Außerdem ist keine Delaminierung in daraus hergestellten Formteilen zu beobachten.

Die vorteilhaften Eigenschaften der erfindungsgemäßen Formmassen widersprechen der allgemein verbreiteten Ansicht, daß in Gemischen aus Polyphenylenethern und einem Polyamid keine Verträglichkeit zwischen den beiden Kunststoffen besteht, da beim Verformen solcher Mischungen meist eine Phasentrennung eintritt, wie z.B. aus der DE-OS 30 27 104 hervorgeht.

Die in den erfindungsgemäßen Formmassen enthaltenen Polyphenylenether A) sind an sich bekannt. Es handelt sich um Verbindungen auf Basis von substituierten, insbesondere disubstituierten Polyphenylenoxiden, wobei der Ethersauerstoff der einen Einheit an den Benzolkern der benachbarten Einheit gebunden ist. Vorzugsweise werden in 2-und/oder 6-Stellung zum Sauerstoffatom substituierte Polyphenylenoxide verwendet, wobei vorteilhaft mindestens 50 Einheiten miteinander verknüpft sind. Als Beispiele für Substituenten sind Halogenatome wie Chlor oder Brom und Alkylreste mit 1 bis 4 Kohlenstoffatomen, die vorzugsweise kein α-ständiges tertiäres Wasserstoffatom aufweisen, z.B. Methyl-, Ethyl-, Propyl-oder Butylreste zu nennen. Die Alkylreste können wiederum durch Halogenatome wie Chlor oder Brom oder durch eine Hydroxigruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Beispiele für Polyphenylenether sind Poly(2,5-dilauryl-1,4-phenylen)oxid, Poly(diphenyl-1,4-phenylen)-oxid, Poly(2,6-dimethoxi-1,4-phenylen)oxid, Poly(2,6-diethoxi-1,4-phenylen)oxid, Poly(2-methoxi-6-ethoxi-1,4-phenylen)oxid, Poly(2-ethyl-6-stearyloxi-1,4-phenylen)oxid, Poly(2,6-dichlor-1,4-phenylen)oxid, Poly(2-methyl-6-phenyl-1,4-phenylen)oxid, Poly(2,6-dibenzyl-1,4-phenylen)oxid, Poly(2-ethoxi-1,4-phenylen)oxid, Poly(2-chlor-1,4-phenylen)oxid, Poly(2,5-dibrom-1,4-phenylen)oxid. Bevorzugt werden Polyphenylenether eingesetzt, bei denen die Substituenten Alkylreste mit 1 bis 4 Kohlenstoffatomen sind wie z.B. Poly(2,6-dimethyl-1,4-phenylen)oxid, Poly(2,6-diethyl-1,4-phenylen)oxid, Poly(2-methyl-6-ethyl-1,4-phenylen)oxid, Poly(2-methyl-6-propyl-1,4-phenylen)oxid, Poly(2,6-dipropyl-1,4-phenylen)oxid und Poly(2-ethyl-6-propyl-1,4-phenylen)oxid.

Hinsichtlich der physikalischen Eigenschaften der Polyphenylenether werden solche bevorzugt, die eine Grenzviskosität von 0,4 bis 0,7 dl/g, gemessen in Chloroform bei 30°C, aufweisen.

Der Anteil des Polyphenylenethers an den erfindungsgemäßen Formmassen ist nicht kritisch, er beträgt jedoch mindestens 5 Gew.%, vorzugsweise 10 bis 89 Gew.%, bezogen auf die Gesamtmasse der Komponenten A) -D). Besonders bevorzugt sind Formmassen, die 20 bis 70 Gew.%, insbesondere 35 bis 60 Gew.% Polyphenylenether enthalten.

Die als Komponente A) verwendeten Polyphenylenether können teilweise durch Styrolpolymere ersetzt werden. Vorzugsweise wird der Anteil des Polyphenylenethers bis zur Hälfte durch solche Styrolpolymere ersetzt. Beispiele für derartige Styrolpolymere sind beispielsweise Polystyrol, Poly-α-methylstyrol oder Poly-p-methylstyrol, von denen Polystyrol bevorzugt wird. Ebenfalls bevorzugt werden Styrolpolymere, die in Gegenwart von 2 bis 20 Gew.% eines kautschukelastischen Polymerisats hergestellt wurden. Dabei sind kautschukartige Polymerisate auf der Basis von Butadien, z.B. Styrol-Butadien-Polymerisate, Polybutadien und ferner Butadien-Styrol-Blockcopolymerisate geeignet. Im Falle der Verwendung von Styrol-Dien-Blockcopolymerisaten, hat es sich als vorteilhaft herausgestellt, wenn bis zu 20 % des Gehalts an Polyphenylenoxid durch Butadien-oder Isopren-Styrol-Blockcopolymerisate oder deren hydrierte Produkte ersetzt werden.

Als Komponente B), enthalten die erfindungsgemäßen Formmassen mindestens ein thermoplastisches Polyamid. Obwohl hinsichtlich der Struktur der Polyamide keine besonderen Beschränkungen zu beachten sind, seien vorzugsweise Polyamide genannt, die sich von Lactamen mit 7 bis 13 Ringgliedern ableiten, wie z.B. Polycaprolactam, Polycaprylactam oder Poly laurinlactam, sowie Polyamide, die durch Umsatz von Dicarbonsäuren mit Diaminen erhalten werden. Als Dicarbonsäuren, die auch in Kombinationen einsetzbar sind, sind Alkandicarbonsäuren mit 6 bis 12, insbesondere 6 bis 10 Kohlenstoffatomen, sowie Terephthalsäure und Isophthalsäure zu nennen, Beispiele für Diamine, die ebenfalls in Kombinationen einsetzbar sind, sind Alkandiamine mit 6 bis 12, insbesondere 6 bis 8 Kohlenstoffatomen, des weiteren m-Xylylendiamin, Bis(4-aminophenyl)methan, Bis(4-aminocyclohexyl)methan oder Bis(4-aminophenyl)propan-2,2. Ebenso sind Mischungen der derart hergestellten Polyamide einsetzbar. Von der technischen Seite haben Polycaprolactam und Polyhexamethylensebacinsäureamid sowie Polyamide die aus Hexamethylendiamin und Isophthalsäure und/oder Terephthalsäure aufgebaut sind, größere Bedeutung erlangt.

Hinsichtlich der physikalischen Eigenschaften bestehen ebenfalls keine speziellen Beschränkungen, doch werden lineare Polyamide mit einer relativen Viskosität von 2,2 bis 4,5, gemessen als 1 gew.%ige Lösung in 96 %iger Schwefelsäure bei 23°C, bevorzugt.

Der Anteil der Komponente B) an den erfindungsgemäßen Formmassen unterliegt wie der der Komponente A) keiner besonderen Beschränkung, doch werden ebenfalls mindestens 5 Gew.%, vorzugsweise 10 bis 89 Gew.% des Polyamids, bezogen auf A) bis C) eingesetzt. Besonders bevorzugte Formmassen enthalten 15 bis 70, ganz besonders bevorzugt 25 bis 60 Gew.% eines thermoplastischen Polyamids. Alle Prozentangaben beziehen sich auf die Gesamtmasse der Komponenten A) bis D).

Als weitere Komponente enthalten die erfindungsgemäßen Formmassen mindestens 0,1 Gew.% eines Copolymerisats C) aus

$C_1$) mindestens 30 Gew.% Styrol und/oder substituierten Styrolen der allgemeinen Formel I

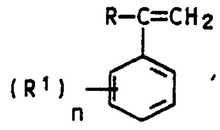 ,

(I)

wobei R und $R^1$ einen Alkylrest mit 1 bis 8 C-Atomen, ein Wasserstoffatom und/oder ein Halogenatom darstellen und n 0, 1, 2 oder 3 ist,

$C_2$) mindestens 0,5 Gew.% eines Epoxidgruppen enthaltenden polymerisierbaren Monomeren und/oder

$C_3$) mindestens 0,05 Gew.% eines Halogenbenzylgruppen enthaltenden polymerisierbaren Monomeren mit der Struktureinheit (II)

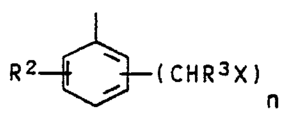

(II)

wobei X ein Halogenatom und $R^2$ und $R^3$ einen Alkylrest mit 1 bis 8 C-Atomen oder ein Wasserstoffatom und n 1, 2 oder 3 ist,
und/oder

$C_4$) mindestens 0,05 Gew.% eines Oxazolin-Gruppen enthaltenden polymerisierbaren Monomeren und

$C_5$) 0 bis 20 Gew.% Acrylnitril, Methacrylnitril und/oder weiteren nicht-ionogenen Comonomeren.

Die Epoxidgruppen-, Halogenbenzylgruppen oder Oxazolingruppen tragenden Monomeren bewirken eine Haftungsverbesserung zwischen den Komponenten A) und B) und damit insgesamt eine Verbesserung der Eigenschaften daraus hergestellter Formmassen. Die haftungsverbessernde Wirkung beruht vermutlich auf einer Wechselwirkung der Epoxid-, Halogenbenzylgruppen und/oder Oxazolingruppen mit den Komponenten A) und B). Ob es bei dieser Wechselwirkung zur Ausbildung kovalenter Bindungen kommt, oder ob es sich um physikalische Wechselwirkungen handelt, kann noch nicht mit Sicherheit gesagt werden.

Wie vorstehend ausgeführt, enthält die Komponente C) mindestens 30, vorzugsweise mindestens 80 Gew.% Styrol und/oder substituierte Styrole ($C_1$) der allgemeinen Formel I. Zusätzlich können bis zu 20 Gew.% Acrylnitril-und/oder Methacrylnitril sowie andere nicht-ionogene Comonomere $C_5$ enthalten sein. Copolymere, bei denen der Anteil von $C_5$ entfällt, werden jedoch bevorzugt.

Unter den substituierten Styrolen der allgemeinen Formel I werden $\alpha$-Methylstyrol und p-Methylstyrol besonders bevorzugt, es eignen sich jedoch z.B. auch die verschiedenen Ethyl-und Chlorstyrole (m-, o-, p-) um nur einige zu nennen.

Als Epoxidgruppen haltige Monomere $C_1$ sind prinzipiell alle Verbindungen geeignet, die eine Epoxidgruppe im Molekül aufweisen. Vorzugsweise werden jedoch Monomere verwendet, die Glycidylgruppen tragen, insbesondere Glycidylacrylat und Glycidylmethacrylat. Es eignen sich jedoch auch Glycidylderivate anderer Säuren und Glycidylallyl-und Vinylether. Diese sind allgemein durch die Struktureinheit

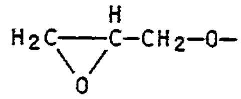

im Molekül charakterisiert.

Im Falle der Verwendung von Epoxidgruppen haltigen Monomeren enthalten die Copolymerisate C) vorzugsweise 80 bis 99,5 Gew.%, besonders bevorzugt 90 bis 98 Gew.% Styrol und/oder substituiertes Styrol und 0,5 bis 20, besonders bevorzugt 2 bis 10 Gew.% Epoxidgruppen haltige Monomere. Der Anteil an weiteren copolymerisierbaren Monomeren, falls diese verwendet werden, beträgt vorzugsweise bis zu 10 Gew.%, besonders bevorzugt weniger als 8 Gew.%.

Das Molekulargewicht der Epoxigruppen enthaltenden Copolymere C) liegt im allgemeinen zwischen 20.000 und 1.000.000, vorzugsweise im Bereich von 40.000 bis 250.000.

Gemäß einer weiteren Ausführungsform wird als Copolymeres C) ein Copolymeres, das aufgebaut ist aus Styrol und/oder substituierten Styrolen (I) und Halogenbenzylgruppen tragenden Monomeren, eingesetzt. Unter Halogenbenzylgruppe wird hierin im folgenden folgende Struktureinheit verstanden:

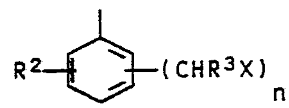

(II)

wobei X Halogen, vorzugsweise Chlor oder Brom, insbesondere Chlor, n = 1, 2 oder 3 ist und $R^2$ und $R^3$ einen Alkylrest mit 1 bis 8 C-Atomen oder ein Wasserstoffatom darstellen. Vorzugsweise werden die Halogenbenzylgruppen durch Chlormethyl-Vinylbenzol (meta, para oder Gemische dieser Isomeren) eingeführt. Wie bei den Epoxigruppen enthaltenden Verbindungen ist jedoch nur die Halogenbenzylgruppe als solche entscheidend, so daß prinzipiell alle mit $C_1$) copolymerisierbaren Verbindungen dieser Struktureinheit geeignet sind.

Hinsichtlich der verwendeten substituierten Styrole und den möglichen teilweisen Ersatz durch andere Monomere gilt das vorstehend für die epoxidgruppenhaltigen Copolymere Gesagte.

Gemäß einer besonders bevorzugten Ausführungsform ist das Copolymerisat C) aufgebaut aus 80 bis 99,5, besonders bevorzugt 95 bis 99,5 Gew.% Styrol und/oder substituiertem Styrol und 0,05 bis 20 Gew.%, besonders bevorzugt 0,5 bis 5 Gew.% des Halogenbenzylgruppen tragenden Monomeren. Der Anteil weiterer copolymerisierbarer Monomerer kann, falls vorhanden, bis zu 10 Gew.% betragen.

Die Halogenbenzylgruppen enthaltenden Copolymere C) weisen in der Regel ein Molekulargewicht von 5000 bis 1.000.000, vorzugsweise von 20.000 bis 250.000 und besonders bevorzugt von 40.000 bis 200.000 auf.

Gemäß einer weiteren Ausführungsform enthält das Copolymerisat C) als Komponente $C_4$) mindestens ein Oxazolingruppen enthaltendes polymerisierbares Monomer.

Diese Monomeren haben vorzugsweise die allgemeine Formel II

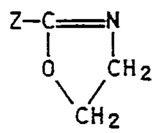

II

wobei Z eine polymerisierbare Doppelbindung enthält.

Bevorzugte Substituenten Z sind

$CH_2=CR^2-$

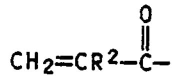

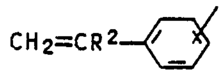

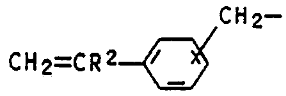

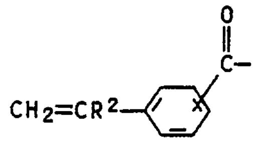

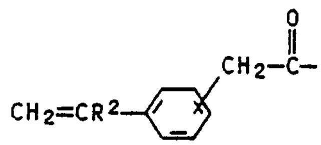

und 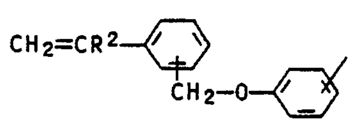

wobei $R^2$ ein Wasserstoffatom oder eine Alkyl-oder Alkoxygruppe mit 1 bis 6 C-Atomen sein kann, z.B. Methyl, i-und n-Propyl oder Butyl-, um nur einige zu nennen.

Besonders bevorzugte Monomere $C_4$) sind Vinyloxazoline der allgemeinen Formel III

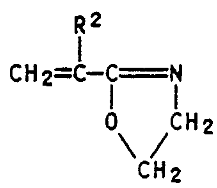 III

wobei $R^2$ die zuvor angegebene Bedeutung hat und vorzugsweise ein Wasserstoffatom oder eine Methylgruppe ist.

Die Herstellung der erfindungsgemäß eingesetzten Copolymerisate kann auf an sich bekannte Weise durch Masse-, Lösungs-, Emulsions-oder Suspensionspolymerisation sowohl kontinuierlich als auch ansatzweise erfolgen. Vorzugsweise polymerisiert man die Monomeren in einem geeigneten Lösungsmittel, wie z.B. Ethylbenzol. In einer besonders bevorzugten Ausführungsform werden die Monomeren, z.B. Styrol und Chlormethylvinylbenzol, bei 120 bis 150°C mit Radikalstarter oder insbesondere thermisch, d.h. ohne Initiator, kontinuierlich bei erhöhtem Druck polymerisiert.

Die Komponente C) kann auch schlagzäh modifiziert sein. Solche Polymere sind dem Fachmann allgemein als schlagzähes Polystyrol bzw. die entsprechenden Styrolderivate bekannt. Dabei werden die Polymeren in Gegenwart eines schlagzäh modifizierenden Kautschuks hergestellt oder mit gepfropften Kautschuken abgemischt. Als kautschukartige Polymere sind z.B. Polybutadien, Styrol-Butadien-, Styrol-b-Butadien, Acrylnitril-Butadien, Ethylen-Propylen-, Polyacrylat und Polyisopren-Kautschuke zu nennen. Bevorzugt ist C) nicht schlagzähmodifiziert. Diese können in ungepfropfter Form auch zur Schlagzähmodifizierung der Komponente A) eingesetzt werden.

In diesem Fall kann zusätzlich zu den Komponenten A) und B) ein schlagzäh modifizierender Kautschuk D) zugesetzt werden. Beispielsweise sind hier zu nennen: Polybutadienkautschuk, Acrylatkautschuk, Styrol-Butadien-Kautschuk, Polybuten-Kautschuk, hydrierte Styrol-Butadien-Kautschuke, Acrylnitril-Butadien-Kautschuk, Ethylen-Propylen-Kautschuk, Polyisopren-Kautschuk, styrolgepfropfte Ethylen-Propylen-Kautschuke, thermoplastische Ethylen-Propylen-Kautschuke, thermoplastische Polyester-Elastomere, Ethylenkautschuke und Ionomere, Styrol-Butadien-Blockcopolymere, wie z.B. AB, ABA, ABA-Tapering und Stern-Blockcopolymere sowie ähnliche Isopren-Blockpolymerisate und hydrierte oder teilweise hydrierte Blockcopolymerisate. Von diesen werden Blockcopolymeriste, die Styrol und Butadien enthalten, bevorzugt.

Der Anteil des schlagzäh modifizierenden Kautschuks D) ist nicht kritisch. Im allgemeinen beträgt er jedoch nicht mehr als 35 Gew.%, bezogen auf die Gesamtmasse der Komponenten A) bis D), bevorzugt 4 bis 20 Gew.%.

Als weitere Komponente können die erfindungsgemäßen thermoplastischen Formmassen übliche Zusatzstoffe und Verarbeitungshilfsmittel in wirksamen Mengen enthalten. Deren Anteil beträgt vorzugsweise bis zu 40, besonders bevorzugt bis zu 20 Gew.%. Nur beispielsweise seien hier genannt Hitze-und Lichtstabilisatoren, Gleit-und Entformungsmittel, Färbemittel, wie z.B. Farbstoffe und Pigmente, Verstärkungsmittel wie Glasfasern, Asbestfasern, Kohlenstoff-Fasern, aromatische Polyamidfasern und/oder Füll stoffe, Gipsfasern, synthetische Kalziumsilikate, Kaolin, kalziniertes Kaolin, Wollastonit, Talkum, Kreide, ferner auch Flammschutzmittel wie anorganische und organische Phosphorverbindungen. Darüber hinaus können auch weitere niedermolekulare oder hochmolekulare Polymere als Zusatzstoffe in den erfindungsgemäßen Formmassen enthalten sein.

Die Herstellung der erfindungsgemäßen thermoplastischen Formmassen erfolgt zweckmäßigerweise durch Mischen der Komponenten bei Temperaturen im Bereich von 250 bis 320°C in üblichen Mischvorrichtungen, wie z.B. Knetern, Banburymischern und Einschneckenextrudern, vorzugsweise mit einem Zweischneckenextruder. Um eine möglichst homogene Formmasse zu erhalten, ist eine intensive Durchmischung notwendig. Die Reihenfolge des Mischens der Komponenten kann variiert werden, es können zwei oder gegebenenfalls drei Komponenten vorgemischt sein oder es können auch alle Komponenten gemeinsam gemischt werden.

Aus den erfindungsgemäßen thermoplastischen Formmassen lassen sich durch Spritzgießen oder Extrusion Formkörper mit guten mechanischen Eigenschaften herstellen.

Falls nicht anders angegeben, beziehen sich im folgenden alle Prozentangaben auf das Gewicht.

Beispiel 1

Erfindungsgemäße Formmassen wurden unter Verwendung folgender Komponenten hergestellt:

Komponente A

Poly-(2,6-dimethyl-1,4-phenylen)ether mit einer relativen Viskosität von 0,61 (gemessen in Chloroform bei 30°C)

Komponente B

$B_1$ Polycaprolactam mit einer relativen Viskosität von 3,2 und

$B_2$ Polycaprolactam mit einer relativen Viskosität von 3,9,

jeweils gemessen an einer Lösung mit einem Gehalt von 1 Gew.% in 96 %iger Schwefelsäure bei 23°C.

Kautschuk (D) zur Erhöhung der Schlagzähigkeit

Styrol-Butadien-Styrol-Blockcopolymerisat, hergestellt durch anionische Polymerisation; mit einem Gehalt von 32 Gew.% Styrol und 68 Gew.% Butadien; $\overline{M}_w$ = 110.000 (Gewichtsmittel des Molekulargewichts).

Komponente C

$C_1$ Styrol-Chlormethylstyrol-Copolymerisat (95 Gew.% Styrol, 3Gew.% m-Chlormethylstyrol, 2 Gew.% p-Chlormethylstyrol), hergestellt durch kontinuierliche Lösungspolymerisation bei 135°C und 6 Stunden Verweilzeit; $\overline{M}_w$ = 80.000 (Gewichtsmittel des Molekulargewichts).

$C_2$ Styrol-Chlormethylstyrol-Copolymerisat (97 Gew.% Styrol, 2 Gew.% m-Chlormethylstyrol, 1 Gew.% p-Chlormethylstyrol), hergestellt wie Komponente $C_1$, aber mit einem Molekulargewicht $\overline{M}_w$ von 55.000 (Gewichtsmittel des Molekulargewichts).

Die Polymeren wurden auf einem Zweischneckenextruder (Fa.Werner & Pfleiderer) bei 280°C gemischt, die erhaltene Formmasse wurde granuliert und im Spritzguß zu Formkörpern verarbeitet. Alle erfindungsgemäßen Proben zeigen keine schichtweisen Spaltungen (Delaminierungen), während dies bei den Vergleichsbeispielen der Fall ist.

Die Ergebnisse der Schlagzähigkeits-und Kerbschlagzähigkeitsmessungen sind in Tabelle 1 aufgeführt.

Tabelle 1

| Versuch-Nr. | Gewichtsprozent A | B | D 1) | C | Schlagzähigkeit n. DIN 53 453 $kJm^{-2}$ | Kerbschlagzähigkeit n. DIN 53 453 $kJm^{-2}$ |
|---|---|---|---|---|---|---|
| 1* | 50 | 50 $B_1$ | - | - | 10,3 | 1,2 |
| 2 | 47 | 47 $B_1$ | - | 6 $C_1$ | 32,2 | 3,6 |
| 3* | 40 | 60 $B_2$ | - | - | 12,0 | 0,9 |
| 4 | 36 | 55 $B_2$ | - | 9 $C_2$ | 41,0 | 2,6 |
| 5 | 66 | 28 $B_2$ | | 6 $C_1$ | 32,0 | 3,9 |
| 6 | 48 | 39 $B_2$ | | 13 $C_1$ | 40,0 | 2,9 |
| 7 | 37 | 56 $B_2$ | | 7 $C_2$ | 47,0 | 4,6 |
| 8* | 37 | 56 $B_1$ | 7 | - | 16,0 | 1,4 |
| 9 | 34 | 51 $B_1$ | 7 | 8 $C_2$ | 84,0 | 8,1 |
| 10 | 40 | 40 $B_2$ | 10 | 10 $C_2$ | kein Bruch | 12,4 |
| 11 | 39 | 51 $B_2$ | 5 | 5 $C_2$ | 73,0 | 9,3 |
| 12* | 40 | 50 $B_2$ | 10 | - | 13,0 | 0,9 |
| 13 | 36 | 44 $B_2$ | 10 | 10 $C_1$ | kein Bruch | 8,5 |

* Vergleichsbeispiele

1) Kautschuk zur Erhöhung der Schlagzähigkeit

Beispiele 14 bis 25

Unter Verwendung der folgenden Komponenten A) bis C) wurden Formmassen durch Mischen der Polymeren auf einem Zweischneckenextruder bei 280°C hergestellt, die erhaltenen Formmassen wurden granuliert und im Spritzguß zu Formkörpern verarbeitet.

Komponente A

Wie in Beispiel 1

Komponente B

$B_3$ Polycaprolactam mit einer relativen Viskosität von 3,0

$B_2$ Polycaprolactam mit einer relativen Viskosität von 4,0,

jeweils gemessen an einer Lösung mit einem Gehalt von 1 Gew.% in 96 %iger Schwefelsäure bei 23°C.

Kautschuk zur Erhöhung der Schlagzähigkeit (D)

Wie in Beispiel 1

Komponente C

$C_3$ Styrol-Glycidylmethacrylat-Copolymerisat (93 Gew.% Styrol, 7 Gew.% Glycidylmethacrylat), hergestellt durch kontinuierliche Lösungspolymerisation bei 140°C und 5 Stunden Verweilzeit; $\overline{M}_w$ = 105.000

$C_4$ Styrol-Glycidylmethacrylat-Copolymerisat (96 Gew.% Styrol, 4 Gew.% Glycidylmethacrylat), Herstellung wie bei $C_3$, jedoch $\overline{M}_w$ = 75.000.

Die Ergebnisse der Schlagzähigkeits-und Kerbschlagzähigkeitsmessungen nach DIN 53 453 sind in Tabelle 2 dargestellt.

Tabelle 2

| Versuch-Nr. | Gewichtsprozent A | B | D | C | Schlagzähigkeit n. DIN 53 453 $kJm^{-2}$ | Kerbschlagzähigkeit n. DIN 53 453 $kJm^{-2}$ |
|---|---|---|---|---|---|---|
| 14* | 40 | 60 $B_3$ | - | - | 12,2 | 0,8 |
| 15 | 36 | 55 $B_3$ | - | 9 $C_3$ | 28,2 | 3,4 |
| 16* | 50 | 50 $B_2$ | - | - | 10,4 | 0,9 |
| 17 | 43 | 48 $B_2$ | - | 9 $C_4$ | 32,1 | 4,6 |
| 18 | 37 | 50 $B_2$ | - | 13 $C_3$ | 41,1 | 4,7 |
| 19 | 37 | 56 $B_3$ | - | 7 $C_4$ | 22,5 | 3,4 |
| 20 | 35 | 52 $B_2$ | - | 13 $C_4$ | 46,0 | 4,5 |
| 21 | 29 | 54 $B_3$ | - | 17 $C_4$ | 44,0 | 4,9 |
| 22* | 41 | 50 $B_3$ | 9 | - | 19,1 | 1,3 |
| 23 | 37 | 45 $B_3$ | 9 | 9 $C_4$ | 77,1 | 8,9 |
| 24* | 44 | 44 $B_2$ | 12 | - | 17,0 | 1,2 |
| 25 | 40 | 40 $B_2$ | 11 | 9 $C_4$ | kein Bruch | 8,9 |

* Vergleichsbeispiele

Beispiele 26 bis 35

Erfindungsgemäße Formmassen wurden unter Verwendung folgender Komponenten hergestellt:

Komponente A:

Wie bei den Beispielen 1 bis 16.

Komponente B

$B_4$ Polycaprolactam mit einer relativen Viskosität von 3,0 und
$B_5$ Polycaprolactam mit einer relativen Viskosität von 4,0,
jeweils gemessen an einer Lösung mit einem Gehalt von 1 Gew.% in 96 %iger Schwefelsäure bei 23°C.

Kautschuk (D) zur Erhöhung der Schlagzähigkeit (Komponente D)

Styrol-Butadien-Styrol-Blockcopolymerisat, hergestellt durch anionische Polymerisation; mit einem Gehalt von 32 Gew.% Styrol und 68 Gew.% Butadien; $M_w$ = 110.000 (Gewichtsmittel des Molekulargewichts).

Komponente C

$C_5$: Styrol-Vinyloxazolin-Copolymerisat (99 mol.% Styrol, 1 mol.% Vinyloxazolin) mit einem Molekulargewicht (Gewichtsmittelwert) von $M_w$ = 200 000.

Die Polymeren wurden auf einem Zweischneckenextruder (Fa. Werner & Pfleiderer) bei 280°C gemischt, die erhaltene Formmasse wurde granuliert und im Spritzguß zu Formkörpern verarbeitet. Alle erfindungsgemäßen Proben zeigen keine schichtweisen Spaltungen (Delaminierungen), während dies bei den Vergleichsbeispielen der Fall ist.

Die Zusammensetzung der einzelnen Formmassen sowie die Ergebnisse der Wasseraufnahme-und Kerbschlagzähigkeitsmessungen sind in der Tabelle 3 aufgeführt.

Tabelle 3

| Beispiel-Nr. | Komponente [Gew.%] A | B | C | Kautschuk D [Gew.%] | Wasseraufnahme [1] n. DIN 53 453 $kJm^{-2}$ | Kerbschlagzähigkeit n. DIN 53 453 $kJm^{-2}$ |
|---|---|---|---|---|---|---|
| 26* | 40,0 | 60,0 $B_4$ | - | - | 1,7 | 0,9 |
| 27 | 36,4 | 54,5 $B_4$ | 9,1 $C_5$ | - | 0,9 | 3,7 |
| 28 | 39,1 | 47,8 $B_4$ | 13,1 $C_5$ | - | 0,8 | 4,3 |
| 29 | 30,8 | 46,1 $B_4$ | 23,1 $C_5$ | | 0,7 | 4,1 |
| 30 | 32,0 | 48,0 $B_4$ | 12,0 $C_5$ | 8,0 | 0,8 | 12,1 |
| 31* | 36,4 | 54,6 $B_4$ | - | 9,0 | 1,4 | 2,0 |
| 32 | 13,8 | 55,2 $B_5$ | 20,7 $C_5$ | 10,3 | 0,7 | 14,1 |
| 33 | 53,8 | 23,1 $B_5$ | 15,4 $C_5$ | 7,7 | 0,4 | 8,0 |
| 34 | 46,2 | 37,8 $B_5$ | 4,2 $C_5$ | 11,8 | 0,8 | 8,4 |
| 35 | 8,1 | 72,6 $B_5$ | 8,1 $C_5$ | 11,2 | 1,3 | 11,1 |

* Vergleichsbeispiele

1) Zur Bestimmung der Wasseraufnahme wurden die granulierten Mischungen (mittl. Korngröße 3 mm) bei 80°C 4 Tage im Vakuum getrocknet, anschließend bei 23°C und 65 % relativer Luftfeuchtigkeit 40 Tage gelagert und danach die prozentuale Gewichtszunahme bestimmt.

Die Ergebnisse zeigen, daß sich die erfindungsgemäßen Formmassen und die daraus hergestellten Formkörper durch eine geringe Wasseraufnahme und eine gute Kerbschlagzähigkeit auszeichnen.

## Ansprüche

1. Thermoplastische Formmassen, enthaltend

A) mindestens 5 Gew.% eines Polyphenylenethers,

B) mindestens 5 Gew.% eines Polyamids,

gekennzeichnet durch einen Gehalt an

C) mindestens 0,1 Gew.% eines Copolymerisats aufgebaut aus

$C_1$) mindestens 30 Gew.% Styrol und/oder substituierten Styrolen der allgemeinen Formel I

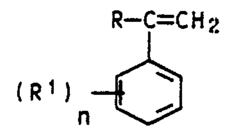

(I)

wobei R und $R^1$ einen Alkylrest mit 1 bis 8 C-Atomen, ein Wasserstoffatom und/oder ein Halogenatom darstellen und n 0, 1, 2 oder 3 ist,

$C_2$) mindestens 0,5 Gew.% eines Epoxidgruppen enthaltenden polymerisierbaren Monomeren und/oder

$C_3$) mindestens 0,05 Gew.% eines Halogenbenzylgruppen enthaltenden polymerisierbaren Monomeren mit der Struktureinheit (II)

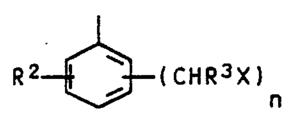

(II)

wobei X ein Halogenatom und $R^2$ und $R^3$ einen Alkylrest mit 1 bis 8 C-Atomen oder ein Wasserstoffatom darstellen und n 1, 2 oder 3 ist, und/oder

$C_4$) mindestens 0,05 Gew.% eines Oxazolin-Gruppen enthaltenden polymerisierbaren Monomeren, und

$C_5$) 0 bis 20 Gew.% Acrylnitril, Methacrylnitril und/oder weiteren Comonomeren, und

D) 0 bis 35 Gew.% eines schlagzäh modifizierenden Kautschuks.

2. Thermoplastische Formmassen nach Anspruch 1, dadurch gekennzeichnet, daß bis zu 50 Gew.% des Polyphenylenethers A) durch ein Styrolpolymeres ersetzt sind.

3. Thermoplastische Formmassen nach den Ansprüchen 1 und 2, dadurch gekennzeichnet, daß das Copolymerisat C aufgebaut ist aus

$C_1$) 80 bis 99,5 Gew.% Styrol und/oder substituierten Styrolen der allgemeinen Formel I

$C_2$) 0,5 bis 20 Gew.% des Epoxidgruppen enthaltenden Monomeren, und

$C_5$) 0 bis 10 Gew.% Acrylnitril und/oder Methacrylnitril.

4. Thermoplastische Formmassen nach den Ansprüchen 1 und 2, dadurch gekennzeichnet, daß das Copolymerisat C) aufgebaut ist aus

$C_1$) 80 bis 99,95 Gew.% Styrol und/oder substituierten Styrolen der allgemeinen Formel I

$C_3$) 0,05 bis 20 Gew.% des Halogenbenzylgruppen enthaltenden Monomeren mit der Struktureinheit II und

$C_5$) 0 bis 10 Gew.% Acrylnitril und/oder Methacrylnitril.

5. Thermoplastische Formmassen nach den Ansprüchen 1 und 2, dadurch gekennzeichnet, daß das Copolymerisat C) aufgebaut ist aus

$C_1$) 80 bis 99,95 Gew.% Styrol und/oder substituierten Styrolen der allgemeinen Formel I

$C_4$) 0,05 bis 10 Gew.% des Oxazolin-Gruppen enthaltenden polymerisierbaren Monomeren

$C_5$) 0 bis 10 Gew.% weiteren Comonomeren.

6. Thermoplastische Formmassen nach den Ansprüchen 1 bis 5, dadurch gekennzeichnet, daß das Copolymerisat C ein Molekulargewicht $M_w$ im Bereich von 20 000 bis 1 000 000 hat.

7. Thermoplastische Formmassen nach den Ansprüchen 1 bis 6, dadurch gekennzeichnet, daß die Komponente D ein Blockcopolymeres aus Styrol und Butadien ist und in Mengen von 4 bis 20 Gew.% vorhanden ist.

8. Formkörper, enthaltend als wesentliche Komponente Formmassen nach den Ansprüchen 1 bis 7.